Europäisches Patentamt

European Patent Office

Office européen des brevets

(19)

(11) Veröffentlichungsnummer: **0 254 340**

**A2**

(12) **EUROPÄISCHE PATENTANMELDUNG**

(21) Anmeldenummer: **87201256.2**

(22) Anmeldetag: **01.07.87**

(51) Int. Cl.4: **F16J 1/16**

(30) Priorität: **24.07.86 DE 3625059**

(43) Veröffentlichungstag der Anmeldung:
**27.01.88 Patentblatt 88/04**

(84) Benannte Vertragsstaaten:
**AT BE CH DE ES FR GB GR IT LI LU NL SE**

(71) Anmelder: **KOLBENSCHMIDT
Aktiengesellschaft
Christian-Schmidt-Strasse 8/12 Postfach
1351
D-7107 Neckarsulm(DE)**

(72) Erfinder: **Steidle, Werner
Zehn Morgen 10
D-7107 Bad Friedrichshall 2(DE)**
Erfinder: **Mielke, Siegfried, Dr.
Mergentheimer Strasse 8
D-7107 Neckarsulm(DE)**
Erfinder: **Schrezenmeier, Kurt
Fichtenweg 6
D-7107 Neckarsulm(DE)**

(74) Vertreter: **Rieger, Harald, Dr.
Reuterweg 14
D-6000 Frankfurt am Main(DE)**

(54) **Kolben für Kolbenmaschinen.**

(57) Bei einem Kolben für Kolbenmaschinen, dessen Bohrungen in den Naben der Bolzenaugen beidseitig der die Kolbenbolzenachse und die Kolbenachse einschließenden Ebene mit als Schmiermitteltaschen dienenden Aussparungen versehen sind, sind zur Erhöhung des Belastbarkeit und zur Erzielung eines geschlossenen hydrodynamischen Schmierfilms zwischen dem Kolbenbolzen und der Auflagefläche des Kolbens auf dem Kolbenbolzen die Übergangsbereiche von den Aussparungen zu den Bohrungen in den Naben der Bolzenaugen mit einem Radius von 1 bis 10 mm verrundet.

**Fig.1**

## Kolben für Kolbenmaschinen

Die Erfindung betrifft einen Kolben für Kolbenmaschinen, vorzugsweise Brennkraftmaschinen, dessen Bohrungen in den Naben der Bolzenaugen jeweils im Bereich der die Bolzenachse einschließenden horizontalen Ebene mit sich über einen Umfang von 20 bis 110°, vorzugsweise 50 bis 60° erstreckenden, als Schmiermitteltaschen dienenden Aussparungen versehen sind.

Da der Kolbenbolzen das kraftübertragende Verbindungsglied zwischen Kolben und Pleuel ist, biegen die an ihm angreifenden Kräfte ihn durch und verformen ihn auch oval. Darüberhinaus arbeitet der Kolbenbolzen infolge kleiner Winkelbewegungen unter Verhältnissen, die nur einen mangelhaften Aufbau eines hydrodynamischen Schmierfilms zwischen dem Kolbenbolzen und der Auflagefläche des Kolbens auf dem Kolbenbolzen zulassen. Beim Anfahrvorgang treten in der Regel vergleichsweise hohe Spitzendrücke auf, die zusammen mit engem Spiel des Kolbenbolzens in den Bohrungen der Naben der Bolzenaugen zu unzulässig hoher Beanspruchung der Naben aufgrund der Ovalverformung des Kolbenbolzens führen können. Dabei werden die Naben der Bolzenaugen in ihrem oberen Scheitel über den ganzen Querschnitt auf Zug beansprucht. Dieser Zugbeanspruchung überlagert sich beim kalten Kolben noch eine erhebliche Biegespannung aus der Ovalverformung des Kolbenbolzens, die in etwa deren Größe erreicht. Selbst bei einer auf hohe Belastungen ausgerichteten Bemessung der Kolbenbolzenlagerung, z.B. Pleuelbreite 35 %, Bolzendurchmesser 42 %, max. mögliche Bolzenlänge 82 % bezogen auf den Kolbendurchmesser, mit einer Auflagefläche (Durchmesser x Auflagelänge) von etwa 22 % der Kolbenbodenfläche führt ein max. Verbrennungsdruck von 150 bis 170 bar zu einer spezifischen Flächenbelastung in den Naben der Bolzenaugen von 680 bis 770 bar. Diese Werte liegen über der Grenze von etwa 650 bar, für die im allgemeinen gegossene Leichtmetallkolben mit konventioneller Konstruktion der Naben der Bolzenaugen - unter der Voraussetzung ausreichender Dehnlänge von über 20 % des Kolbendurchmessers - sicher ausgelegt werden können.

Um die kostengünstige Bauweise des Aluminiumgußkolbens auch unter höheren Belastungen beibehalten zu können und den Aufbau eines hydrodynamischen Schmierfilms in der Bolzenlagerung zu erreichen, ist aus der DE-OS 16 50 206 bekannt, die Bohrungen in den Naben der Bolzenaugen im Querschnitt oval zu gestalten, wobei die kleinere Achse des Ovals parallel zur Längsachse des Kolbens verläuft. Diese Maßnahmen reichen jedoch nicht aus, um den bei modernen Brennkraftmaschinen auftretenden hohen Belastungen der Naben der Bolzenaugen gerecht zu werden. In der GB-PS 851 322 ist ein Kolben für Brennkraftmaschinen vorgesehen, bei dem auf diametral gegenüberliegenden Seiten der Bohrungen in den Naben der Bolzenaugen je eine mondsichelförmige Aussparung angeordnet ist. Hierdurch soll erreicht werden, daß sich der unter Belastung im Motorbetrieb oval verformende Kolbenbolzen in die mondsichelförmigen Aussparungen hineindeformieren kann, ohne eine Querkraft auf die Naben der Bolzenaugen auszuüben. Auf diese Weise läßt sich zwar eine Erhöhung der Belastung von ca. 10 % erreichen, jedoch werden keine hydrodynamischen Schmierverhältnisse im Bereich zwischen dem Kolbenbolzen und der Auflagefläche des Kolbens auf dem Kolbenbolzen erreicht.

Es ist deshalb die Aufgabe der vorliegenden Erfindung, einen Kolben für Kolbenmaschinen der eingangs beschriebenen Bauweise so zu gestalten daß es zur Ausbildung eines geschlossenen hydrodynamischen Schmierfilms im Bereich zwischen dem Kolbenbolzen und der Auflagefläche des Kolbens auf dem Kolbenbolzen kommt und eine Erhöhung der Belastbarkeit der Naben der Bolzenaugen bei engem Spiel des Kolbenbolzens in den Naben erzielbar ist, ohne daß dadurch - schädigende Rückwirkungen auf die Spannungen an anderer Stelle des Kolbens eintreten.

Gelöst ist diese Aufgabe dadurch, daß die einen Radius von 10 bis 40 %, vorzugsweise 15 bis 25 % des Kolbendurchmessers aufweisenden Aussparungen in den Übergangsbereichen zu den Bohrungen in den Naben der Bolzenaugen mit einem Radius von 1 bis 10 mm verrundet sind. Durch diese Maßnahme wird eine Erhöhung der Belastbarkeit der Naben der Bolzenaugen bis zu 35 % und die Ausbildung eines geschlossenen hydrodynamischen Schmierfilms im Bereich zwischen dem Kolbenbolzen und der Auflagefläche des Kolbens auf den Kolbenbolzen erzielt.

Im Hinblick auf die Ausbildung eines geschlossenen hydrodynamischen Schmierfilms lassen sich besonders günstige Eigenschaften dann erreichen, wenn die radiale Tiefe der Aussparungen, bezogen auf die Mantellinie der Bohrungen in den Naben der Bolzenaugen, 0,05 bis 2 mm, vorzugsweise 0,1 bis 0,5 mm beträgt.

Zweckmäßigerweise sind die Aussparungen im Querschnitt kreisringstückförmig oder kreissichelstückförmig gestaltet.

Im Rahmen der vorzugsweisen Ausgestaltung der Erfindung sind die Koordinaten des Mittelpunktes für den Radius der Übergangsbereiche von den Aussparungen zu den Bohrungen in den Naben der Bolzenaugen so angeordnet, daß die an die Mantellinie der Bohrungen in den Naben der Bolzenaugen und die an die Mantellinie der Übergangsbereiche von den Aussparungen zu den Bohrungen in den Naben der Bolzenaugen jeweils auf der Verschneidungslinie von Aussparung und Bohrung in den Naben der Bolzenaugen gelegten Tangenten einen Winkel von etwa 90° miteinander bilden.

Die Wirkung hinsichtlich der Ausbildung eines hydrodynamischen Schmierfilms wird dadurch unterstützt, daß die Verschneidungslinien, wenigstens jedoch die kolbenkopfseitigen Verschneidungslinien unter einem Winkel von 0,5 bis 5,0°, vorzugsweise 1,0 bis 1,5°, geneigt zur horizontal durch die Bolzenachse gelegten Ebene verlaufen.

Zweckmäßigerweise sind die Aussparungen zu der die Kolbenachse und die Bolzenachse einschließenden Ebene angeordnet.

Gegebenenfalls ist es auch möglich, die Übergangsbereiche der Aussparungen in die Bohrrungen in den Naben der Bolzenaugen zur unteren Nabenhälfte mit einem größeren Radius als zur oberen Nabenhälfte hin zu verrunden.

Um für besondere Belastungsfälle eine ausreichende Schmiermittelversorgung zwischen Kolbenbolzen und Bohrung in den Naben der Bolzenaugen zu gewährleisten, kann es angebracht sein, die Übergangsbereiche der Aussparungen in die Bohrrungen mit einem Radius von größer 10 mm zu verrunden.

Die Aussparungen erstrecken sich gemäß einem weiteren Erfindungsmerkmal von der Innenkante der Naben der Bolzenaugen über einen Bereich von bis zu 75 %, vorzugsweise 20 bis 40 % der Nabenbreite.

Nachstehend ist die Erfindung anhand der Zeichnungen näher und beispielhaft erläutert. Es zeigen:

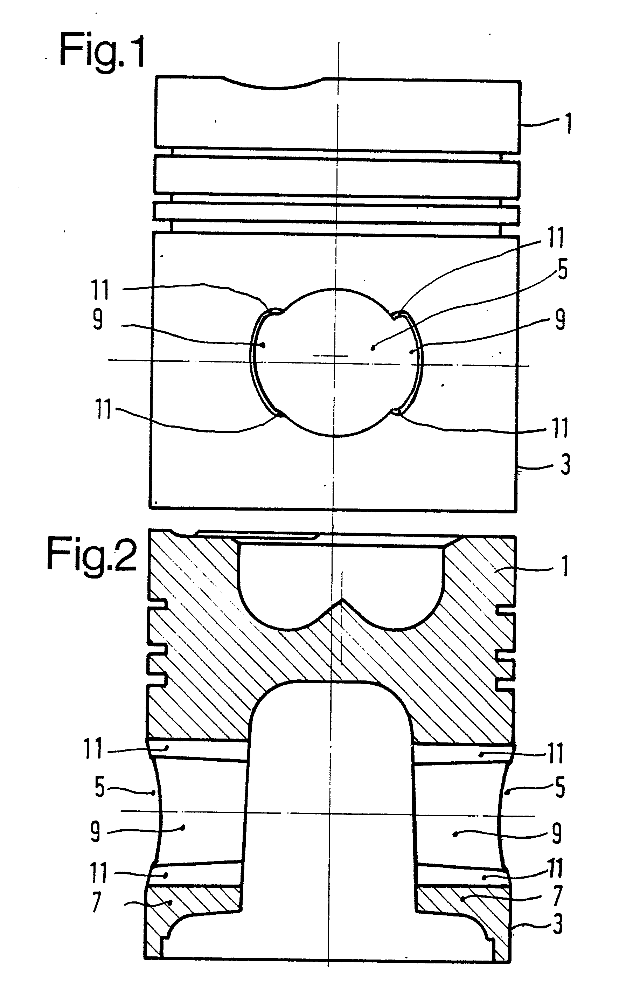

Fig. 1 eine Seitenansicht eines Kolbens für Brennkraftmaschinen in Richtung der Bolzenachse mit sich über die ganze Breite der Naben der Bolzenaugen erstreckenden Aussparungen,

Fig. 2 einen Längsschnitt durch Fig. 1 entlang der durch die Kolbenachse und die Bolzenachse gelegten Ebene,

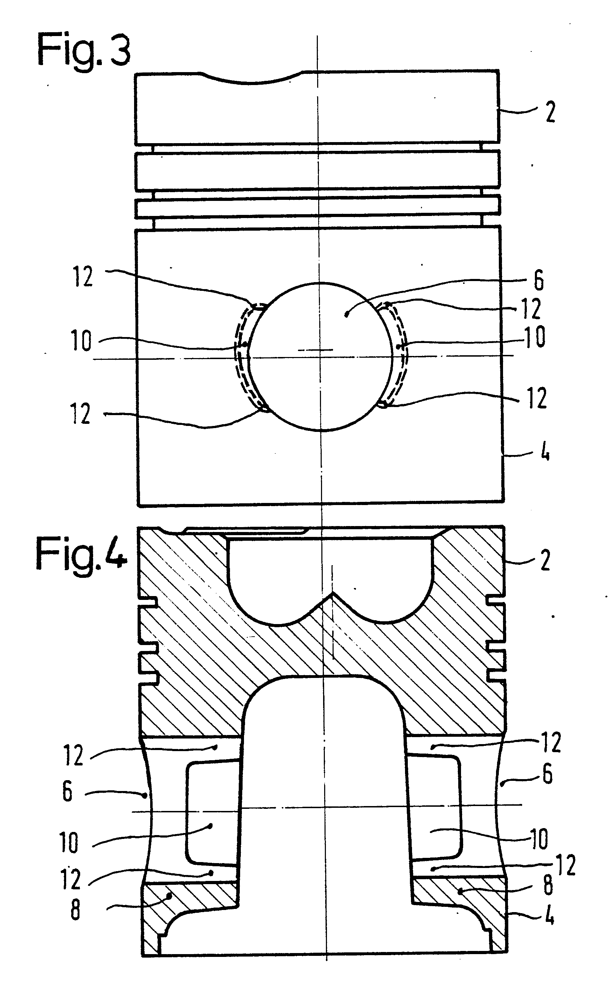

Fig. 3 eine Seitenansicht eines Kolbens für Brennkraftmaschinen in Richtung der Bolzenachse mit sich über ca. 50 % der Breite der Naben der Bolzenaugen erstreckenden Aussparungen,

Fig. 4 einen Längsschnitt durch Fig. 3 entlang der durch die Kolbenachse und die Bolzenachse gelegten Ebene.

Bei dem einteiligen, aus Kolbenkopf (1,2) mit Brennraummulde und Kolbenschaft (3,4) bestehenden Kolben, sind die Bohrungen (5,6) in den Naben (7,8) der Bolzenaugen beidseitig der durch die Kolbenbolzenachse gelegten horizontalen Ebene mit kreisringstückförmigen bzw. kreissichelstückförmigen Aussparungen (9,10) versehen, die sich über einen Winkelbereich von 100° erstrecken und deren radiale Tiefe, bezogen auf die Mantellinie der Bohrung (5,6) in den Naben (7,8) der Bolzenaugen, bei einem Radius von 27 mm für die Bohrung (5,6) 0,3 mm beträgt. Die Übergangsbereiche (11,12) der Aussparungen (9,10) zu den Bohrungen (5,6) in den Naben (7,8) der Bolzenaugen sind mit einem Radius von 8 mm verrundet.

Die mit der Erfindung erzielten Vorteile bestehen insbesondere darin, daß nicht nur eine deutlich höhere Belastbarkeit der Naben der Bolzenaugen erzielt wird, sondern auch bei allen Betriebszuständen eine geschlossene Ausbildung eines hydrodynamischen Schmierfilms zwischen dem Kolbenbolzen und der Auflagefläche des Kolbens auf dem Kolbenbolzen gewährleistet ist, so daß bei engem Spiel des Kolbenbolzens in den Naben sowohl Freßsicherheit als auch Geräuscharmut erreicht werden. Ein besonderer Vorteil liegt darin, daß die Aussparungen auf gießtechnischem Wege herstellbar sind und somit ihre Herstellung durch spanende Bearbeitung entfällt.

Der Gegenstand der Erfindung läßt sich nicht nur bei Kolben mit kreiszylinderförmig gestalteten Bohrungen in den Naben der Bolzenaugen, sondern auch bei Kolben anwenden, bei denen die Bohrungen in den Naben der Bolzenaugen konisch zu den Innenkanten der Naben aufgeweitet sind oder bei denen ein sogenannter mit im Bereich der Innenkanten der Naben der Bolzenaugen jeweils mit einem Einzug versehener Formbolzen eingesetzt ist.

**Ansprüche**

1. Kolben für Kolbenmaschinen, vorzugsweise Brennkraftmaschinen, dessen Bohrungen in den Naben der Bolzenaugen jeweils im Bereich der die Bolzenachse einschließenden horizontalen Ebene mit sich über einen Umfang von 20 bis 110°, vorzugsweise 50 bis 60° erstreckenden, als Schmiermitteltaschen dienenden Aussparungen versehen sind, dadurch gekennzeichnet, daß die einen Radius von 10 bis 40 % des Kolbendurchmessers aufweisenden Aussparungen (9,10) in den Übergangsbereichen (11,12) zu den Bohrungen (5,6) in den Naben (7,8) der Bolzenaugen mit einem Radius von 1 bis 10 mm verrundet sind.

2. Kolben nach Anspruch 1, dadurch gekennzeichnet, daß der Radius der Aussparungen (9,10) 15 bis 25 % des Kolbendurchmessers beträgt.

3. Kolben nach den Ansprüchen 1 und 2, dadurch gekennzeichnet, daß die Aussparungen (9,10) eine radiale Tiefe von 0,05 bis 2,0 mm, vorzugsweise 0,1 bis 0,5 mm, bezogen auf die Mantellinie der Bohrungen (5,6) in den Naben (7,8) der Bolzenaugen, besitzen.

4. Kolben nach den Ansprüchen 1 bis 3, dadurch gekennzeichnet, daß die Aussparungen (9,10) im Querschnitt kreisringstückförmig gestaltet sind.

5. Kolben nach den Ansprüchen 1 bis 3, dadurch gekennzeichnet, daß die Aussparungen (9,10) im Querschnitt kreissichelstückförmig gestaltet sind.

6. Kolben nach einem oder mehreren der Ansprüche 1 bis 5, dadurch gekennzeichnet, daß die Koordinaten des Mittelpunkts des Radius der Übergangsbereiche (11,12) so angeordnet sind, daß die an die Mantellinie der Bohrungen (5,6) in den Naben (7,8) der Bolzenaugen und an die Mantellinie der Übergangsbereiche in den Verschneidungslinien gelegten Tangenten einen Winkel von etwa 90° miteinander bilden.

7. Kolben nach einem oder mehreren der Ansprüche 1 bis 6, dadurch gekennzeichnet, daß die Verschneidungslinien, wenigstens jedoch die kolbenkopfseitigen Verschneidungslinien unter einem Winkel von 0,5 bis 5,0°, vorzugsweise 1,0 bis 1,5°, geneigt zur horizontal durch die Bolzenachse gelegten Ebene verlaufen.

8. Kolben nach einem oder mehreren der Ansprüche 1 bis 7, dadurch gekennzeichnet, daß die Aussparungen (9,10) symmetrisch zu der die Kolbenachse und die Bolzenachse einschließenden Ebene angeordnet sind.

9. Kolben nach einem oder mehreren der Ansprüche 1 bis 8, dadurch gekennzeichnet, daß die Übergangsbereiche (11,12) der Aussparungen (9,10) in die Bohrungen (5,6) in den Naben (7,8) der Bolzenaugen zur unteren Nabenhälfte hin mit einem größeren Radius als zur oberen Nabenhälfte hin verrundet sind.

10. Kolben nach einem oder mehreren der Ansprüche 1 bis 9, dadurch gekennzeichnet, daß die Übergangsbereiche (11,12) der Aussparungen (9,10) in die Bohrungen (5,6) in den Naben (7,8) der Bolzenaugen mit einem Radius größer 10 mm verrundet sind.

11. Kolben nach einem oder mehreren der Ansprüche 1 bis 10, dadurch gekennzeichnet, daß sich die Aussparungen (9,10) von der Innenkante der Naben (7,8) der Bolzenaugen über einen Bereich von bis zu 75 %, vorzugsweise 20 bis 40 % der Nabenbreite erstrecken.

# Fig.1

# Fig.2

Fig. 3

2

12

6

12

10

10

12

12

4

Fig. 4

2

12

12

6

6

10

10

12

12

8

8

4